# EUROPÄISCHE PATENTANMELDUNG

(11) **EP 3 745 549 A1**
(43) Veröffentlichungstag der Anmeldung: **02.12.2020**
(21) Anmeldenummer: 20172876.3
(22) Anmeldetag: 05.05.2020
(51) Int. Cl.: H02G 3/04, B60L 53/30, E04H 12/22, H02B 1/50

(54) **LADESTATION FÜR ELEKTROFAHRZEUGE**

(30) Priorität: 31.05.2019 DE 102019114651
(71) Anmelder: Innogy eMobility Solutions GmbH, 44139 Dortmund (DE)
(72) Erfinder: Helnerus, Stefan, 59821 Arnsberg (DE); Müller-Winterberg, Christian, 46282 Dorsten (DE)
(74) Vertreter: Cohausz & Florack

(57) **Zusammenfassung**

Ladestation 1 für Elektrofahrzeuge mit einem Ladestationsgehäuse 4, einer in dem Ladestationsgehäuse verlaufenden Tragkonstruktion 6, wobei die Tragkonstruktion 6 mit Bereich des Bodens des Ladestationsgehäuses 4 eine Befestigungskonsole zur Befestigung der Tragkonstruktion 6 an einem Bodenfundament 8 aufweist, dadurch gekennzeichnet, dass das Ladestationsgehäuse 4 zumindest teilweise über die Tragkonstruktion 6 gestülpt ist und dass eine bodenseitige Stirnkante 4a des Ladestationsgehäuses 4 von einem Schutzprofil 2 aufgenommen ist.

## Beschreibung

Der Gegenstand betrifft eine Ladestation für Elektrofahrzeuge.

Der Aufbau der Ladeinfrastruktur ist von entscheidender Bedeutung für die flächendeckende Etablierung von Elektromobilität. Dazu ist es notwendig, in öffentlichen als auch in teilöffentlichen Räumen Ladestationen für Elektrofahrzeuge in großem Maße zu installieren. Die Ladestationen sollen sich dabei in das Straßenbild einfügen und werden daher in der Regel als Ladesäule konzipiert. Ladesäulen gemäß des Gegenstandes zeichnen sich durch eine kompakte Bauform mit einer geringen Grundfläche aus. Die Ladesäule gemäß des Gegenstandes sind in der Regel stelenartig aufgebaut und verfügen über integrierte oder anschließbare Ladeelektronik.

Wie erwähnt ist der umfangreiche Ausbau der Ladeinfrastruktur ein wesentlicher Faktor für die Akzeptanz der Elektromobilität. Daher müssen Ladestationen möglichst flächendeckend und in großer Anzahl in kurzer Zeit installiert werden. Dies ist hinsichtlich der Konzeption, dem Bau und dem tatsächlichen Installieren vor Ort der Ladestation eine Herausforderung, da durch den massenhaften Einsatz der Ladestation diese im industriellen Maßstab herstellbar sein müssen und besonders einfach, bevorzugt durch eine einzige Person, vor Ort installierbar sein sollten.

Dies ist bei bisherigen Ladestation nur bedingt der Fall. Zum Einen ist die Montage vor Ort komplex und aufwendig, zum Anderen ist bei der Montage die Gefahr der Beschädigung der Ladestation hoch.

Vor diesem Hintergrund lag dem Gegenstand die Aufgabe zugrunde, die Montage von Ladestationen erheblich zu vereinfachen.

Diese Aufgabe wird durch eine Ladestation nach Anspruch 1 gelöst.

Es ist erkannt worden, dass ein Gehäuse der Ladestation (nachfolgend auch Ladesäule genannt) besonders einfach auf einem Betonfundament montiert werden kann, wenn innerhalb des Gehäuses eine Tragkonstruktion verläuft. Durch die stelenartige Form der Ladestation kommt es zu hohen Drehmomenten im Bereich der bodenseitigen Befestigung der Tragkonstruktion. Die Tragkonstruktion ist über eine Befestigungskonsole an einem Bodenfundament befestigt.

Das Ladestationsgehäuse ist an der Tragkonstruktion befestigt. Details zu einer möglichen Befestigung sind nachfolgend beschrieben. Durch die Anordnung des Ladestationsgehäuses an der Tragkonstruktion kann sich der Abstand einer bodenseitigen Stirnkante des Ladestationsgehäuses zum Boden, insbesondere zum Bodenfundament, ändern. Um sicherzustellen, dass das die Ladestation mit dem Betonfundament abschließt und um zu verhindern, dass die Stirnkante des Ladestationsgehäuses bei der Montage beschädigt wird, wird vorgeschlagen, dass eine bodenseitige Stirnkante des Ladestationsgehäuses von einem Schutzprofil aufgenommen ist. Bei der Montage wird das Ladestationsgehäuse, welches rohrförmig sein kann, über die Tragkonstruktion gestülpt. Das Ladestationsgehäuse ist bevorzugt aus einem Blech gebildet oder stranggezogen und hat eine Wandstärke von wenigen mm. Beim Aufsetzen des Ladestationsgehäuses auf die Tragkonstruktion kann dieses, wenn es nicht geschützt ist, mit seiner bodenseitigen Stirnkante am Bodenfundament anstoßen und verbiegen. Um dies zu verhindern, wird ein Schutzprofil vorgeschlagen, das eine bodenseitige Stirnkante des Ladestationsgehäuses aufnimmt.

Gemäß einem Ausführungsbeispiel wird vorgeschlagen, dass das Schutzprofil umlaufend die Stirnkante aufnimmt. Somit ist das Schutzprofil bevorzugt ringförmig umlaufend geschlossen und nimmt die Stirnkante vollständig auf. Hierdurch wird verhindert, dass die Stirnkante an einer Stelle beim Aufsetzen des Ladestationsgehäuses auf das Bodenfundament beschädigt werden kann.

Eine umgreifende Aufnahme der Stirnkante ist dann möglich, wenn das Schutzprofil zumindest abschnittsweise ein U-Profil oder ein C-Profil ist. Im Querschnitt kann das Schutzprofil zumindest abschnittsweise U- und/oder C-förmig sein.

Gemäß einem Ausführungsbeispiel wird vorgeschlagen, dass das Schutzprofil innenseitig des Ladestationsgehäuses, sich in Längsrichtung des Ladestationsgehäuses erstreckende, voneinander beabstandete Stege aufweist. Diese Stege können im montierten Zustand an der Innenseite des Ladestationsgehäuses anliegen. Außenseitig des Ladestationsgehäuses kann das Schutzprofil einen umlaufenden Steg haben, der sich in Längsrichtung erstreckt und das Ladestationsgehäuse an der Stirnkante vollständig aufnimmt. Das Schutzprofil kann zwischen dem äußeren, umlaufenden Steg und den inneren, beabstandeten Stegen klemmend das Ladestationsgehäuse aufnehmen. Der umlaufenden Steg und jeweils ein innerer Stegen bilden eine Nut aus, in welcher die Stirnkante aufgenommen ist.

Gemäß einem Ausführungsbeispiel wird vorgeschlagen, dass das Schutzprofil innenseitig des Ladestationsgehäuses, sich in Längsrichtung des Ladestationsgehäuses erstreckende Befestigungsstifte aufweist.

Das Ladestationsgehäuse kann innenseitig sich in Längsrichtung erstreckende Nuten aufweisen. Diese Nuten können sich über die gesamte Länge des Ladestationsgehäuses erstrecken. Bodenseitig können die Nuten dazu genutzt werden, mit den Befestigungsstiften zu interagieren, insbesondere können die Befestigungsstifte in die Nuten eingesteckt werden. Kopfseitig des Ladestationsgehäuses können die Nuten dazu genutzt werden, das Ladestationsgehäuse mit einem Ladestationskopf zu verschrauben. Insbesondere wenn das Ladestationsgehäuse stranggepresst ist, können diese Nuten im Strangpress-Prozess kontinuierlich entlang des Ladestationsgehäuses verlaufend, an der Innenseite des Ladestationsgehäuses angeordnet, vorgesehen werden. Das heißt, die Nuten entstehen während des Fertigungsprozesses des Ladestationsgehäuses und erstrecken sich über dessen gesamte Länge. Nuten können auch als sich in Längsrichtung erstreckende Aufnahmen verstanden werden. Anstelle von Nuten können rohrförmige Aufnahmen vorgesehen sein.

Gemäß einem Ausführungsbeispiel wird vorgeschlagen, dass das Schutzprofil innenseitig des Ladestationsgehäuses sich radial nach innen erstreckende Laschen aufweist. Diese Laschen können Aufnahmen insbesondere Ausnehmungen, insbesondere runde Ausnehmungen, beispielsweise Bohrungen aufweisen. Diese können bodenseitig für die Aufnahme von Senkkopfschrauben gebildet sein. Die Aufnahmen können im montierten Zustand mit innenseitig, sich in Längsrichtung des Ladestationsgehäuses erstreckenden, an der Innenseite des Ladestationsgehäuses angeordneten Aufnahmen fluchten. Diese Aufnahmen an dem Ladestationsgehäuse können entsprechend der oben beschriebenen Aufnahmen gebildet sein. Die Aufnahmen können zur Aufnahme von Schrauben oder Befestigungsstiften dienen, so dass das Schutzprofil an dem Ladestationsgehäuse befestigt, insbesondere verschraubt werden kann.

Gemäß einem Ausführungsbeispiel wird vorgeschlagen, dass sich das Schutzprofil auf der der Stirnkante abgewandten Seite in Längsrichtung in einen Bodenbereich erstreckt und dass im Bodenbereich an zumindest einer Seitenfläche zumindest eine Sollbruchstelle für eine Ausbrechung angeordnet ist. Der Abstand zwischen der Stirnkante des Ladestationsgehäuses und dem Bodenfundament kann durch das Schutzprofil überbrückt werden. Die sich in Längsrichtung erstreckende Seitenfläche kann diesen Abstand überbrücken. Ist in der Seitenfläche eine Sollbruchstelle als Ausbrechung vorgesehen, so kann bedarfsweise die Seitenfläche ausgebrochen werden und über diese Ausbrechung können Anschlussleitungen für die Ladestation in das Innere des Ladestationsgehäuses geführt werden.

Gemäß einem Ausführungsbeispiel wird vorgeschlagen, dass das Schutzprofil auf der der Stirnkante abgewandten Seite eben ist.

Zwischen dem Ladestationsgehäuse und der Befestigungskonsole des Tragprofils kann ein Ringraum gebildet sein. Durch diesen Ringraum ist das Schutzprofil beabstandet von der Befestigungskonsole an der Stirnkante angeordnet.

Wie bereits erläutert, kann das Schutzprofil klemmend an der Stirnkante gehalten sein. Das Schutzprofil kann eine Nut aufweisen, in die die Stirnkante des Ladestationsgehäuses eingesetzt wird. Diese Nut kann als Presspassung gebildet sein und somit die Stirnkante klemmend aufnehmen. Die Nut kann zwischen den sich in Längsrichtung erstreckenden, innen liegenden Stegen und einer Außenwand des Schutzprofils liegen.

Gemäß einem Ausführungsbeispiel wird vorgeschlagen, dass das Ladestationsgehäuse aus einem Ladestationsfuß und einem Ladestationskopf gebildet ist. Der Ladestationsfuß bildet das Teil des Ladestationsgehäuses, welches mit dem Schutzprofil verbunden ist.

Durch die hohen Kräfte, die auftreten können, die beispielsweise bis zu 1200 Nm betragen können (z.B. gemessen nach DIN61439-7), ist die Befestigungskonsole starken mechanischen Belastungen ausgesetzt. Um diese Belastungen aufnehmen zu können, wird vorgeschlagen, dass die Befestigungskonsole aus einem Metallgussteil gebildet ist. Die innerhalb der Ladestation bzw. des Ladestationsgehäuses verlaufende Tragkonstruktion ist im Bereich ihres Bodens über eine Befestigungskonsole mit dem Bodenfundament befestigt.

Die Tragkonstruktion dient der mechanischen Stabilität der Ladestation und zur Befestigung dieser am Bodenfundament. Die Ladestation umfasst einen Ladestationsfuß und einen Ladestationskopf. In dem Ladestationsfuß verläuft die Tragkonstruktion. Die Tragkonstruktion ist im Bereich des Bodens des Ladestationsfußes über eine Befestigungskonsole mit einem Bodenfundament zu befestigen.

Für eine besonders einfache Montage, auch durch einen einzigen Monteur, wird vorgeschlagen, dass der Ladestationskopf mit der Tragkonstruktion unmittelbar verbunden ist und dass der Ladestationsfuß über den Ladestationskopf mit der Tragkonstruktion verbunden ist. Dies bedeutet, dass eine axiale Lagerung des Ladestationsfußes in einer Längsachse der Tragkonstruktion ausschließlich über den Ladestationskopf erfolgt. Es ist zwar möglich, dass der Ladestationsfuß bodenseitig radial an der Befestigungskonsole gelagert ist, die axiale Lagerung ohne Freiheitsgrad erfolgt jedoch ausschließlich über den Ladestationskopf. Eine Bewegung des Ladestationsfußes relativ zur Tragkonstruktion in einer Richtung entlang der Längsachse der Tragkonstruktion wird bei einer Montage des Ladestationsfußes an dem Ladestationskopf verhindert. Der Ladestationskopf ist mit der Tragkonstruktion verbunden. Über den Ladestationskopf ist mithin der Ladestationsfuß mit der Tragkonstruktion verbunden. Ladestationskopf und Ladestationsfuß sind bevorzugt zweiteilig.

Zur Befestigung des Ladestationsfußes an dem Ladestationskopf sind Befestigungsmittel vorgesehen. Dies können die oben beschriebenen, innenseitig verlaufenden Nuten sein. Die Befestigungsmittel sind bevorzugt ausschließlich im Inneren, das heißt an der inneren Umfangsfläche des Ladestationsfußes und des Ladestationskopfes angeordnet. Insbesondere im Ladestationskopf sind die Befestigungsmittel in einer Öffnung einer Frontfläche vorgesehen, welche zur Aufnahme einer Ladeelektronik vorgesehen ist. Nachdem der Ladestationskopf mit dem Ladestationsfuß verbunden wurde und die Ladeelektronik in die Öffnung eingesetzt wurde, lässt sich der Ladestationskopf nur noch dann von dem Ladestationsfuß entfernen, wenn zuvor die Ladeelektronik entfernt wurde.

Die Befestigungsmittel sind bevorzugt derart, dass der Ladestationsfuß durch die Befestigungsmittel axial in Längsrichtung hin zum Ladestationskopf gezogen wird und dabei relativ zur Tragkonstruktion beweglich ist. Nachdem die Tragkonstruktion auf dem Bodenfundament montiert wurde, wird der Ladestationsfuß über die Tragkonstruktion gestülpt und anschließend der Ladestationskopf an der Tragkonstruktion mechanisch fixiert. Der Ladestationskopf ist dann ohne Freiheitsgrad an der Tragkonstruktion montiert. Wird über die Befestigungsmittel der Ladestationsfuß an den Ladestationskopf befestigt, so wird dabei der Ladestationsfuß axial in Längsrichtung der Tragkonstruktion relativ zur Tragkonstruktion hin zum Ladestationskopf bewegt. Dadurch kommt es zu einem Umgreifen einer bodenseitigen Öffnung des Ladestationskopfes um einen kopfseitigen, umlaufenden Steg des Ladestationsfußes. Der Ladestationskopf umgreift im montierten Zustand umlaufend den Ladestationsfuß, so dass lediglich ein umlaufender Spalt zwischen Ladestationskopf und Ladestationsfuß vorhanden ist. Die Befestigungsmittel sind bevorzugt in der Öffnung zur Aufnahme von Ladeelektronik angeordnet, so dass im montierten Zustand von außen keine Befestigungsmittel sichtbar sind.

In dem Ladestationskopf können die Befestigungsmittel beispielsweise an einem Flansch derart gelagert sein, dass sie axial fest gelagert sind. Das heißt, dass die Befestigungsmittel, wenn der Ladestationskopf mit der Tragkonstruktion verbunden ist, in einer Richtung hin zum Bodenfundament einen Anschlag erfahren und somit axial fest gelagert sind. Über diesen Anschlag wird die Anzugskraft, mit der der Ladestationsfuß an den Ladestationskopf angezogen wird, in den Ladestationskopf eingeleitet.

Durch die Befestigung des Ladestationsfußes an dem Ladestationskopf wird der Ladestationsfuß relativ zur Befestigungskonsole und/oder einem Bodenfundament angehoben. Hierbei wird der Ladestationsfuß in einer Richtung parallel zur Längsachse der Tragkonstruktion in Richtung des Ladestationskopfes bewegt. In dem sich bildenden Abstand zwischen dem Ladestationsfuß und dem Bodenfundament kann das Schutzprofil angeordnet sein.

Im montierten Zustand ist der Ladestationsfuß über den Ladestationskopf mit der Tragkonstruktion verbunden. Bodenseitig des Ladestationsfußes erfolgt eine Lagerung des Ladestationsfußes an der Befestigungskonsole der Tragkonstruktion bevorzugt durch nach außen gerichtete Federelemente. Dadurch erfolgt eine radial nach außen gerichtete, federnde Lagerung des Ladestationsfußes an der Befestigungskonsole.

Auch wird vorgeschlagen, dass der Ladestationsfuß stranggeformt, insbesondere stranggegossen oder stranggepresst ist und dass der Ladestationskopf druckgegossen ist. In dem Stranggießprozess für den Ladestationsfuß ist es möglich, ein rohrförmiges Profil in einem kontinuierlichen Prozess herzustellen. Nach Ablängen des Profils ist der Ladestationsfuß mechanisch nahezu endbearbeitet und kann anschließend beispielsweise lediglich einer Pulverbeschichtung, einer Lackierung oder einer sonstigen Beschichtung zugeführt werden.

Bevorzugt sind Ladestationsfuß und Ladestationskopf aus einem Aluminiumwerkstoff hergestellt. Auch ist die Verwendung eines Stahlwerkstoffes möglich. Bevorzugt sind Ladestationsfuß und Ladestationskopf aus demselben metallischen Werkstoff hergestellt.

Wie bereits zuvor erwähnt, ist der Ladestationskopf als Deckel gebildet. Es wird vorgeschlagen, dass der Ladestationskopf deckelförmig mit Seitenwänden (Seitenflächen und Frontflächen) und einen offenen Boden ist. In dem Ladestationskopf kann in zumindest einer Seitenwand eine Ausnehmung vorgesehen sein, die zur Aufnahme einer Ladeelektronik gebildet ist. Die Aufnahme kann dabei wannenförmig in einer Seitenwand des Ladestationskopfes angeordnet sein und die Ladeelektronik in einem hierfür geeigneten Gehäuse eingehaust, wannenförmig aufnehmen.

Die geschlossenen Seitenwände führen zu einem umlaufend geschlossenen Deckel. Lediglich die bodenseitige Öffnung korrespondiert im montierten Zustand mit dem Innenraum des Ladestationsfußes, so dass ein nahezu freier Durchgang zwischen dem Innenraum des Ladestationsfußes und dem Innenraum des Ladestationskopfes gewährleistet ist. Durch diesen Durchgang kann eine elektrische Verbindung einer anzuschließenden Ladeelektronik mit einem Energieversorgungsnetz gewährleistet sein.

Bevorzugt wird der Ladestationsfuß auf einem Fundament aufgesetzt. Dabei wird die Stirnkante des Ladestationsfußes durch das Schutzprofil geschützt. Aus dem Fundamentboden kann ein Verbindungskabel mit einem Energieversorgungsnetz durch das innere des Ladestationsfußes bis in den Ladestationskopf geführt sein. In dem Ladestationskopf kann in einer Ausnehmung die Ladeelektronik angeordnet sein, die dann zum Anschluss des Verbindungskabels mit dem Energieversorgungsnetz verwendet wird. Daher sind Ladestationsfuß und Ladestationskopf im montierten Zustand zunächst frei von elektronischen und elektrischen Baugruppen und führen lediglich das Verbindungskabel zu einem Energieversorgungsnetz.

Gemäß einem Ausführungsbeispiel wird vorgeschlagen, dass eine obere Öffnung des Ladestationsfußes im montierten Zustand der Ladestation mit einem offenen Boden des Ladestationskopfes fluchtet. Durch den hierdurch gebildeten Durchgang zwischen Ladestationskopf und Ladestationsfuß kann das Verbindungskabel als auch eine Tragkonstruktion geführt sein, welche nachfolgend beschrieben wird. Das durch den Ladestationsfuß und den Ladestationskopf gebildete Gehäuse ist bevorzugt hohl und beinhaltet ausschließlich die Tragkonstruktion sowie das Verbindungskabel mit einem Energieversorgungsnetz. Weitere Komponenten die nicht zur Verbindung von Ladestationsfuß mit Ladestationskopf einerseits und Ladestationskopf mit Tragkonstruktion andererseits dienen, sind im Inneren des aus Ladestationsfuß und Ladestationskopf gebildeten Gehäuses nicht anzufinden.

Zur Montage des Gehäuses wird vorgeschlagen, dass in dem Ladestationsfuß eine Tragkonstruktion angeordnet ist, die sich vom unteren Ende des Ladestationsfußes bis über das obere Ende des Ladestationsfußes hinaus erstreckt. Diese Tragkonstruktion dient zur mechanischen Befestigung sowohl des Ladestationsfußes als auch des Ladestationskopfes an dem Bodenfundament.

Es wird vorgeschlagen, dass der Ladestationsfuß nur über den Ladestationskopf an der Tragkonstruktion befestigt ist. Die mechanische Stabilität des Ladestationsfußes wird somit ausschließlich über den Ladestationskopf gewährleistet. Bei der Montage wird zunächst der Ladestationsfuß über die Tragkonstruktion gestülpt. Anschließend wird der Ladestationskopf an der Tragkonstruktion befestigt und abschließend wird der Ladestationsfuß an den Ladestationskopf angeschlossen, insbesondere mit dem Ladestationskopf verschraubt. Diese Montage ist durch eine einzige Person möglich. Ladestationskopf und Ladestationsfuß sind sehr leicht. Da sie zunächst frei von Ladeelektrik sind, kann das Gewicht so niedrig gehalten werden, dass eine Person die Ladestation aufstellen kann.

Gemäß einem Ausführungsbeispiel wird vorgeschlagen, dass in dem Ladestationsfuß ein umlaufender Ringraum über die gesamte Höhe des Ladestationsfußes verläuft. Der Ringraum ist zwischen der Tragkonstruktion und der Innenwand des Ladestationsfußes gebildet. Weitere mechanische Bauelemente sind in dem Ladestationsfuß nicht vorhanden. Lediglich am Boden der Tragkonstruktion kann eine Befestigungskonsole vorgesehen sein, die mit einer bodenseitigen Öffnung des Ladestationsfußes korrespondiert.

Wie bereits erläutert, ist der Ladestationskopf mit der Tragkonstruktion verbunden. Hierbei ist insbesondere eine Verschraubung denkbar. Der Ladestationskopf wird zunächst mit der Tragkonstruktion verbunden. Anschließend wird der Ladestationsfuß über den Ladestationskopf mit der Tragkonstruktion verbunden. Dabei kann der Ladestationsfuß über die oben beschriebenen, sich in Längsrichtung erstreckenden Nuten mit dem Ladestationskopf verschraubt werden. Dieser Aufbau ermöglicht es, das Gehäuse durch nur eine Person aufstellen zu können. Dabei wird zunächst die Tragkonstruktion auf dem Bodenfundament ausgerichtet. Anschließend muss lediglich der Ladestationsfuß über die Tragkonstruktion gestülpt werden und der Kopf an der Tragkonstruktion befestigt werden. Abschließend wird der Ladestationsfuß gegenüber dem Ladestationskopf befestigt und ist somit mittelbar an der Tragkonstruktion befestigt. Ein separates Ausrichten des Ladestationsfußes ist nicht notwendig.

Wie bereits erläutert, kann für das Gehäuse ein Aluminiumwerkstoff verwendet werden. Es wird vorgeschlagen, dass der Ladestationsfuß aus Aluminiumstrangguss gebildet ist und/oder dass der Ladestationskopf auf Aluminiumdruckguss gebildet ist. Strangguss eignet sich für einfache, hohle Profile, wie sie der Ladestationsfuß darstellt. Durch den Druckguss des Ladestationskopfes ist eine gestalterische Freiheit gegeben, die notwendig ist, um beispielsweise auch Aufnahmen für eine Ladeelektronik zu gewährleisten.

Der Ladestationsfuß hat ein rohrförmiges, achteckiges Querschnittsprofil. Dabei sind die Längskanten des Profils mit einer Fase versehen, so dass scharfe Kanten vermieden werden.

Bodenseitig weist auch der Ladestationskopf ein rohrförmiges, dem Ladestationsfuß angepasstes Querschnittsprofil auf. Das Querschnittsprofil des Ladestationskopfes ist bodenseitig kongruent zu dem Querschnittsprofil des Ladestationsfußes.

Um den Ladestationskopf zu schließen wird vorgeschlagen, dass sich die Seitenflächen der Seitenwände des Ladestationskopfes ausgehend vom offenen Boden halbkreisförmig oder elliptisch hin zu einem oberen Scheitelpunkt erstrecken. Zwischen den Seitenflächen sind Frontflächen vorgesehen, wobei zumindest eine Frontfläche des Ladestationskopfes eine Öffnung zur Aufnahme von Ladetechnik aufweist. In der Frontfläche, die die Öffnung oder Aufnahme von Ladetechnik aufweist ist ebenfalls geschlossen.

Durch den Einsatz des Druckgießens ist es möglich, verschiedenste Formen des Ladestationskopfes herzustellen, die jeweils mit demselben Ladestationsfuß korrespondieren. So ist es beispielsweise möglich, die Seitenflächen zu verbreitern, so dass sowohl in der ersten als auch in der zweiten Frontfläche eine Öffnung zur Aufnahme von Ladetechnik vorgesehen sein kann. Auch ein solcher Ladestationskopf kann auf einen gegenständlichen Ladestationsfuß aufgesteckt werden.

Die Öffnung in den Frontflächen ist bevorzugt wannenförmig und hat einen Boden oder umlaufende Seitenwände, die sich vom Boden bis zur Frontfläche erstrecken. Der Boden grenzt die Aufnahme gegenüber dem Inneren des Ladestationskopfes ab. Lediglich zur mechanischen Fixierung des Ladestationsfußes an dem Ladestationskopf können Durchgangsöffnungen (z.B. Bohrungen) vorgesehen sein. Darüber hinaus können Durchgänge in den Seitenwänden oder dem Boden vorgesehen sein, um ein Verbindungskabel mit einem Energieversorgungsnetz aus dem Inneren des Gehäuses nach außen zu führen. In die Öffnung kann anschließend eine Ladeelektronik eingesetzt werden, die von der Öffnung aufgenommen wird.

Um zu verhindern, dass an der äußeren Mantelfläche des Gehäuses störende Versprünge oder Kanten auftreten, wird vorgeschlagen, dass an einer stirnseitigen oberen Kante des Ladestationsfußes ein Steg angeordnet ist. Dieser Steg springt bevorzugt von der äußeren Mantelfläche des Ladestationsfußes zurück. An einer bodenseitigen Kante des Ladestationskopfes kann eine umlaufende Aufnahme für den Steg angeordnet sein. Diese Aufnahme kann von der inneren Mantelfläche des Ladestationsfußes zurückspringen. Die äußere Mantelfläche der Stele bleibt dabei eben. Im montierten Zustand von Ladestationskopf und Ladestationsfuß nimmt die Aufnahme den Steg derart auf, dass sie diese umlaufend umgreift. Somit bildet sich lediglich eine umlaufende Naht zwischen dem Ladestationsfuß und dem Ladestationskopf. Dadurch, dass die Aufnahme den Steg umgreift, kann Regenwasser nicht so leicht in das Innere des Gehäuses eindringen.

Wie bereits erwähnt, kann der Steg von der inneren Mantelfläche des Ladestationsfußes an seiner oberen Stirnkante radial nach innen zurückspringen. Auch ist es möglich, dass die Aufnahme umlaufend mit der äußeren Mantelfläche des Ladestationsfußes fluchtet. Die Aufnahme kann einen Rücksprung an der inneren Mantelfläche des Ladestationskopfes sein.

Zur Befestigung des Ladestationsfußes an dem Ladestationskopf wird vorgeschlagen, dass im Bereich des Steges radial nach innen weisende Befestigungskörper angeordnet sind und dass im Bereich der Aufnahme radial nach innen weisende Befestigungskörper angeordnet sind. Die Befestigungskörper können beispielsweise Flansche sein, durch die Durchgangsbohrungen zur Aufnahme von Schrauben angeordnet sind. Die Befestigungskörper greifen im montierten Zustand derart ineinander, dass der Ladestationsfuß mit dem Ladestationskopf formschlüssig verbunden ist. Dabei kann durch ein Verbinden der Ladestationsfuß axial in Richtung des Ladestationskopfes gezogen werden und sich dabei relativ zur Tragkonstruktion bewegen. In dem Ladestationsfuß kann der Befestigungskörper durch die oben beschriebene Nuten gebildet sein.

Durch diese axiale Bewegung relativ zur Tragkonstruktion, deren Position zum Bodenfundament fixiert ist, ergibt sich im montierten Zustand, dass der Ladestationsfuß durch eine Befestigung an dem Ladestationskopf beabstandet von dem Bodenfundament ist. Im Bereich dieser Beabstandung kann das Schutzprofil an dem Ladestationsfuß angeordnet sein.

Die Tragkonstruktion ragt von der Befestigungskonsole durch den Ladestationsfuß bis in den Ladestationskopf hinein. Im Bereich des Ladestationskopfes ist die Tragkonstruktion mit dem Ladestationskopf verbunden. Hierzu sind Befestigungsmittel zum Verbinden des Ladestationskopfes mit der Tragkonstruktion vorgesehen. Diese Befestigungsmittel sind insbesondere im Bereich einer Öffnung in einer Frontseite des Ladestationskopfes vorgesehen. Insbesondere sind die Befestigungsmittel zum Verschrauben des Ladestationskopfes an der Tragkonstruktion vorgesehen. Die Öffnung in einer Frontseite des Ladestationskopfes ist bevorzugt zur Aufnahme von Ladeelektronik geeignet. Insbesondere ist die Öffnung wannenförmig mit einem Boden, der von der äußeren Mantelfläche der Frontseite zurückspringt und im Wesentlichen umlaufenden Seitenwänden, welche den Boden mit der äußeren Mantelfläche der Frontseite verbinden, gebildet. Die

Öffnung ist bevorzugt kongruent zu einer äußeren Umfangsfläche der Ladeelektronik, welche in die Öffnung eingesetzt wird.

Zwischen einem oberen Ende der Tragkonstruktion und der Befestigungskonsole ist die Tragkonstruktion als U-Profil gebildet. Hierdurch wird eine besonders hohe Biegesteifigkeit der Tragkonstruktion erreicht.

Ladestationskopf und Ladestationsfuß sind im montierten Zustand miteinander gefügt. Hierbei greift der Ladestationsfuß in eine bodenseitige Öffnung des Ladestationskopfes ein. Dort bildet sich eine Kontaktfläche zwischen Ladestationsfuß und Ladestationskopf. Die Kontaktfläche ist insbesondere durch einen im montierten Zustand innenliegenden Steg des Ladestationsfußes gebildet, wobei der Steg an einer Innenwand des Ladestationskopfes im Bereich der bodenseitigen Öffnung anliegt. Durch diesen Formschluss wird zumindest eine radiale Lagerung des Ladestationsfußes an dem Ladestationskopf gewährleistet. Eine axiale Lagerung erfolgt durch die Befestigungsmittel, welche die oben beschriebenen sich in Längsrichtung erstreckende Nuten sein können, insbesondere eine Verschraubung des Ladestationsfußes an dem Ladestationskopf.

Der Ladestationskopf ist mit der Tragkonstruktion verbunden. Diese Verbindung ist insbesondere derart, dass der Ladestationskopf ohne Freiheitsgrad an der Tragkonstruktion verbunden ist.

Die Verbindung ist bevorzugt klemmend, da diese besonders fehlertolerant ist. Durch ein Verschrauben eines Klemmelementes, so dass dieses den Ladestationskopf klemmend an der Tragkonstruktion befestigt, kann die Lagerung des Ladestationskopfes an der Tragkonstruktion realisiert sein.

Um die äußere Mantelfläche des Ladestationsgehäuses frei von Befestigungsmitteln halten zu können, wird vorgeschlagen, dass die Befestigung des Ladestationskopfes an der Tragkonstruktion im Bereich einer Öffnung zur Aufnahme einer Ladeelektronik vorgesehen ist. Ist die Ladeelektronik in die Aufnahme eingesetzt, können die Befestigungsmittel nicht mehr erreicht werden, ohne die Ladeelektronik entfernen zu müssen. Hierzu wird vorgeschlagen, dass in der Öffnung zur Aufnahme der Ladeelektronik eine im Ladestationskopf innenliegende Zwischenwand vorgesehen ist. Diese Zwischenwand kann beispielsweise der Boden der Öffnung oder eine Seitenwand der Öffnung sein. Die Seitenwand liegt im montierten Zustand zwischen der Tragkonstruktion und einer Öffnung in der Mantelfläche des Ladestationskopfes. Diese Öffnung ist bevorzugt in einer Frontseite des Ladestationskopfes und kongruent zu einer äußeren Umfangsfläche einer Ladeelektrik.

An der Zwischenwand kann eine Aufnahme für ein Klemmelement gebildet sein und das Klemmelement ist über in die Tragkonstruktion eingreifende Befestigungsmittel in der Aufnahme geklemmt. So ist es beispielsweise möglich, dass das Klemmelement gegenüber der Tragkonstruktion verschraubt wird und dabei mit einer Klemmkraft gegen die Zwischenwand gedrückt wird, so dass die Zwischenwand zwischen dem Klemmelement und der Tragkonstruktion geklemmt ist.

Der Ladestationsfuß ist radial fest an dem Ladestationskopf gelagert und durch Befestigungsmittel mit einem Freiheitsgrad in axialer Richtung an dem Ladestationskopf gelagert. Durch das Umgreifen des Ladestationsfußes durch den Ladestationskopf ist der Ladestationsfuß radial an dem Ladestationskopf ohne Freiheitsgrad gelagert. Sind die Befestigungsmittel angezogen, ist der Ladestationsfuß ohne Freiheitsgrad an dem Ladestationskopf gelagert. Die Tragkonstruktion ist durch den Ladestationskopf und den Ladestationsfuß vollständig eingehaust. In diesem Gehäuse kann im Bereich des Ladestationskopfes eine Aufnahme für eine Ladeelektronik vorgesehen sein.

Diese Aufnahme kann wannenartig sein mit einem Boden und Seitenwänden. Die Aufnahme ist bevorzugt in zumindest einer Frontseite, insbesondere einer ebenen Flächen des Ladestationskopfes vorgesehen. Es ist möglich, dass auch zwei oder mehr Aufnahmen in ebenen Seitenwänden oder Frontflächen des Ladestationskopfes vorgesehen sind.

Nachfolgend wird der Gegenstand anhand einer Ausführungsbeispiele zeigenden Zeichnung näher erläutert. In der Zeichnung zeigen:
- Fig. 1a: ein Schutzprofil nach einem Ausführungsbeispiel;
- Fig 1b: ein Schnitt durch das Schutzprofil nach Fig. 1a;
- Fig 1c: ein Schnitt durch das Schutzprofil nach Fig. 1a;
- Fig. 2a: ein Schutzprofil nach einem Ausführungsbeispiel;
- Fig 2b: ein Schnitt durch das Schutzprofil nach Fig. 2a;
- Fig. 3: ein Schutzprofil nach einem Ausführungsbeispiel;
- Fig. 4: ein Schnitt durch einen Ladestationsfuß;
- Fig. 5: ein Schnitt durch einen Ladestationsfuß;
- Fig. 6: eine Ladestation.

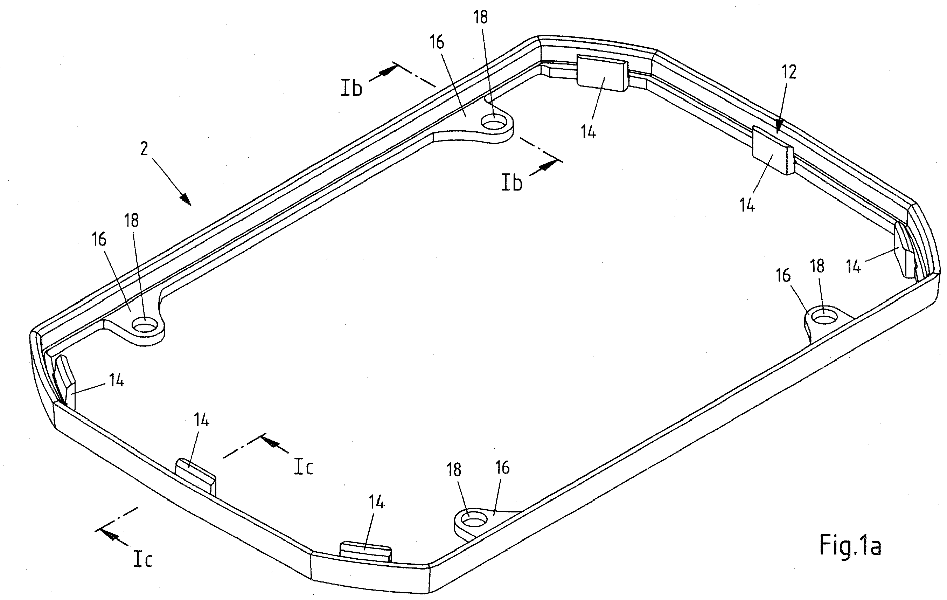

Figur 1a zeigt ein Schutzprofil 2 für eine stirnseitige Kante eines Ladestationsgehäuses.

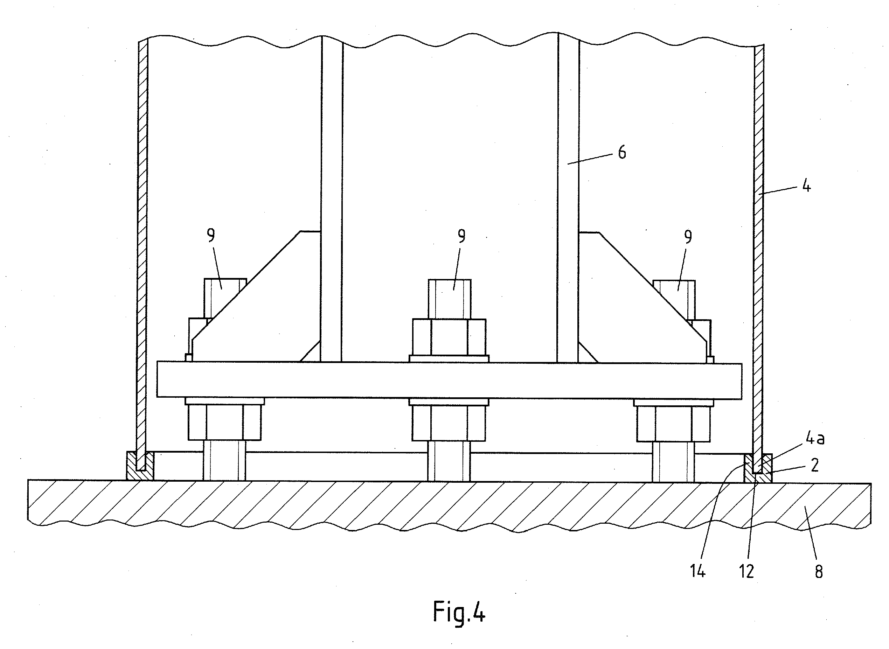

Wie in Figur 4 dargestellt ist, ist ein Ladestationsgehäuse 4 über eine Tragkonstruktion 6 mit einem Bodenfundament 8 verbunden. Die Tragkonstruktion 6 ist über Anschlussbolzen 9 mit dem Bodenfundament 8 verschraubt. Das Ladestationsgehäuse 4 ist mit der Tragkonstruktion 6 verschraubt. An der stirnseitigen Kante 4a des Ladestationsgehäuses 4 ist das Schutzprofil 2 klemmend an dem Ladestationsgehäuse 4 befestigt. Das Schutzprofil 2 ist in einem Freiraum zwischen dem Bodenfundament 8 und der stirnseitigen Kante 4a des Ladestationsgehäuses 4 angeordnet.

In der Figur 1a ist zu erkennen, dass das Schutzprofil 2 ringförmig umlaufend ist. Das Schutzprofil 2 ist L-förmig, mit einer Außenwand, die sich in Längsrichtung vom Boden erstreckt. Radial nach innen verlaufend ist ein Boden vorgesehen. Beabstandet voneinander und mit einem Abstand zu einer Außenwand des Schutzprofils 2 können sich in Längsrichtung nach oben erstreckende Stege 14 vorgesehen sein. Diese Stege 14 dienen zur Stabilisierung des Ladestationsgehäuses 4 an dem Schutzprofil 2. Zwischen den Stegen 14 und der Außenwand bildet sich eine Nut 12. Hier ist das Schutzprofil 2 C- oder U-förmig.

Des Weiteren können radial nach innen weisende Laschen 16 vorgesehen sein. An diesen radial nach innen weisenden Laschen 16 können Aufnahmen 18 vorgesehen sein. In die Aufnahmen 18 können Schrauben 20 eingesetzt werden, welche mit sich an der Innenwand des Ladestationsgehäuses 4 in Längsrichtung erstreckenden Nuten 22 verschraubt werden können.

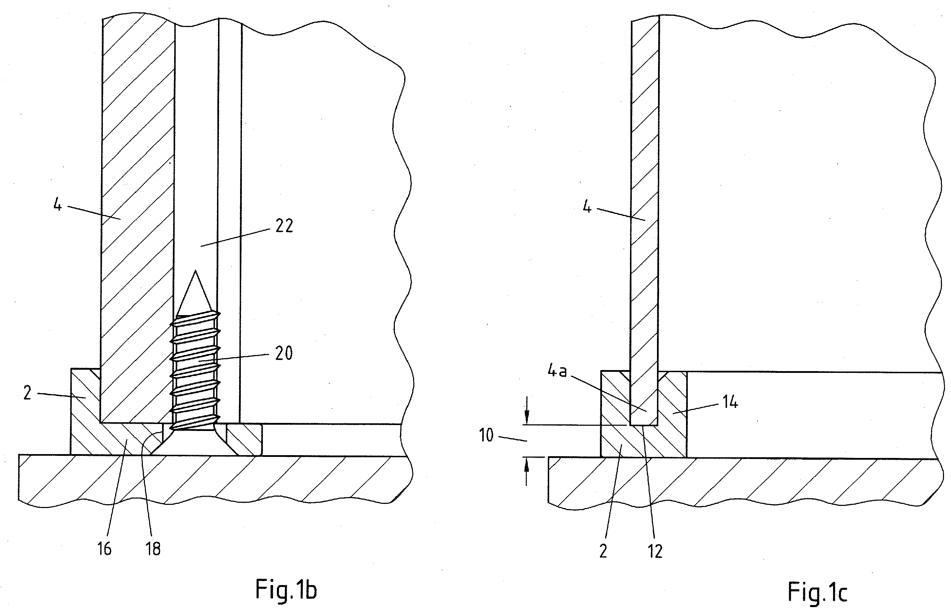

Eine solche Verschraubung ist in der Figur 1b gezeigt. Zu erkennen ist, dass das Schutzprofil 2 L, förmig mit einer Außenwand und einem Boden ist. Am Boden erstrecken sich die Laschen 16. In den Laschen 16 ist die Aufnahme 18 als Öffnung gebildet. Eine Senkkopfschraube 20 wird durch die Öffnung in die Nut 22 eingeschraubt. Eine Verbindung mit einem Bolzen oder einer Niet ist auch möglich.

Fig. 1c zeigt einen Schnitt entlang eines Steges 14. Hier ist zu erkennen, dass sich zwischen der Außenwand des Schutzprofils 2 und dem Steg 14 eine Nut 12 bildet. In diese Nut 12 ist die stirnseitige Kante 4a des Ladesäulengehäuses 4 eingesteckt und dort bevorzugt klemmend gehalten.

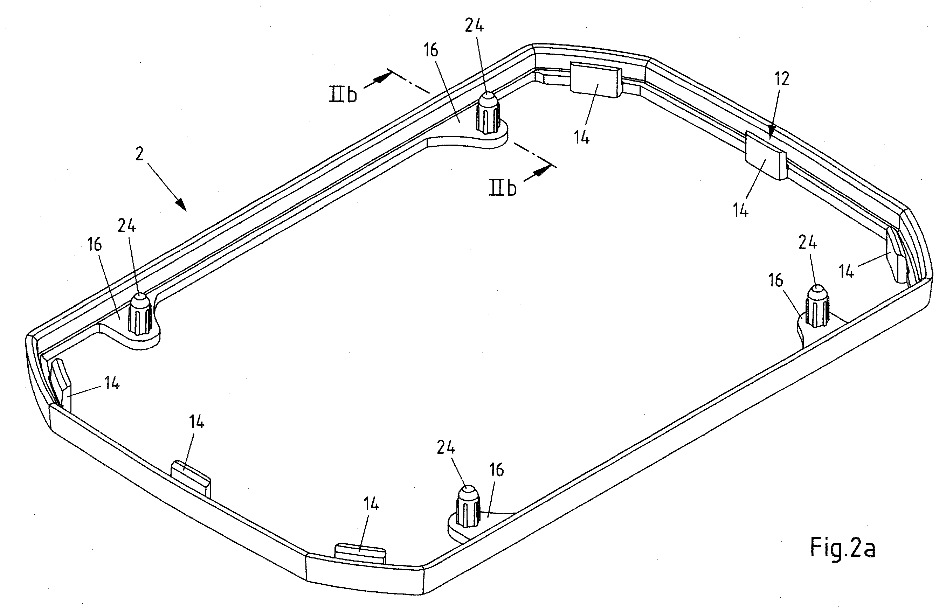

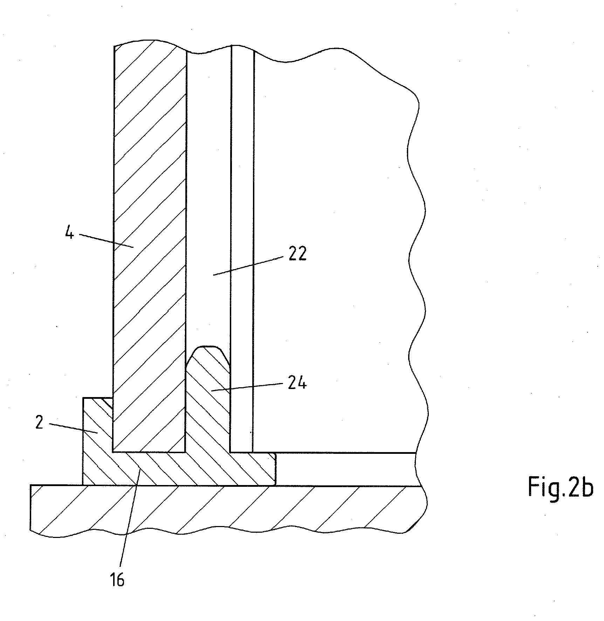

Figur 2a zeigt ein weiteres Schutzprofil 2 bei dem anstelle der Laschen 16 mit den Aufnahmen 18, Laschen 16 mit Befestigungsstiften 24, welche sich in Längsrichtung des Ladestationsgehäuses 4 erstrecken, gebildet sind. Die Anordnung der Befestigungsstifte 24 in den Nuten 22 ist in der Figur 2b dargestellt.

Fig. 2b zeigt, wie der Befestigungsstift 24 in die Nut 22 des Ladestationsgehäuses 4 eingreift und bevorzugt als Presspassung hieran angepasst ist. Dadurch ist das Schutzprofil 2 an dem Ladestationsgehäuse 4 form- und kraftschlüssig befestigt.

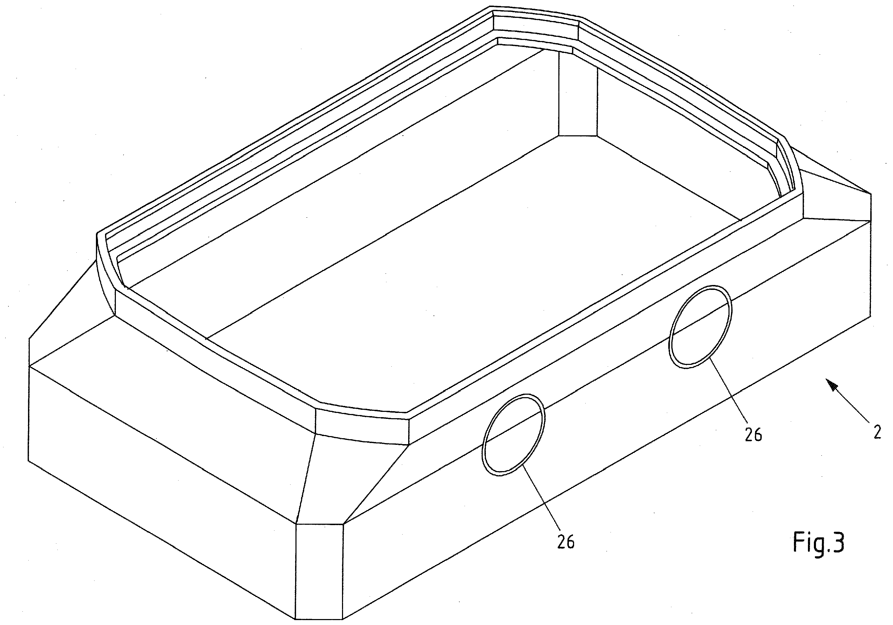

Figur 3 zeigt ein weiteres Ausführungsbeispiel eines Schutzprofils 2. Das Schutzprofil 2 hat in dem Ausführungsbeispiel gemäß der Figur 3 in zumindest einer Seitenwand Sollbruchstellen 26, die für Ausbrechungen vorgesehen sind. Werden die Ausbrechungen geöffnet, so kann hierdurch ein nicht gezeigtes Energiekabel in das Innere der Ladestation bzw. des Ladestationsgehäuses (4) geführt werden.

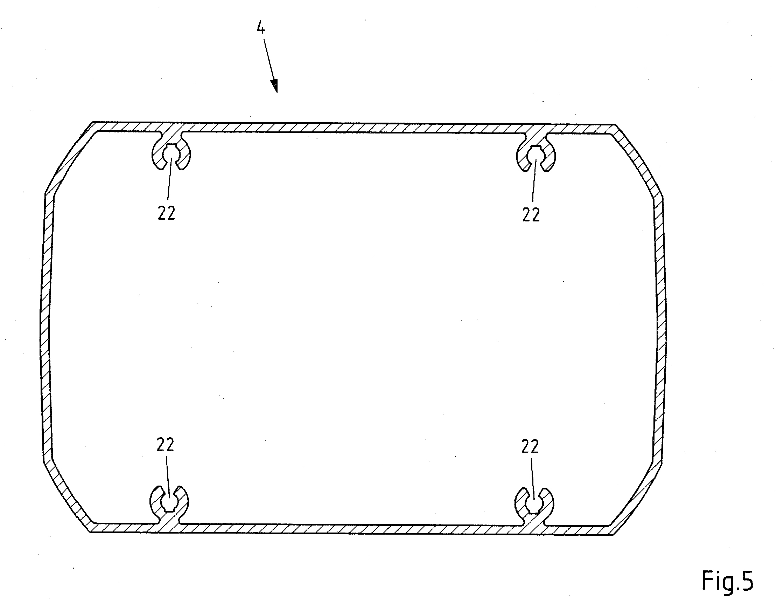

Fig. 5 zeigt einen Querschnitt durch ein Ladestationsgehäuse 4. Zu erkennen ist, dass die Nuten 22 in radial nach innen weisenden Vorsprüngen an dem Ladestationsgehäuse 4 angeordnet sind. Diese Nuten 22 können während des Strangpressens des Ladestationsgehäuses gebildet werden.

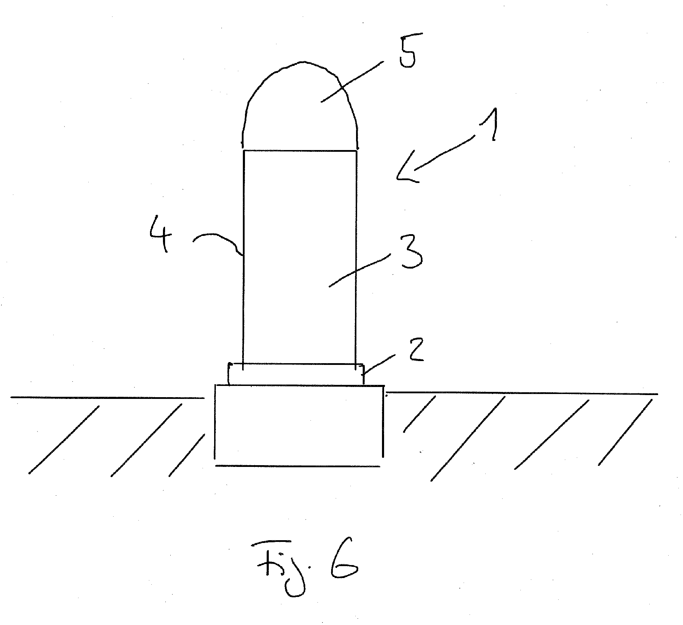

Fig. 6 zeigt eine Ladestation 1. Die Ladestation 1 hat ein Ladestationsgehäuse 4 aus einem Ladestationsfuß 3 und einem Ladestationskopf 5. An dem Ladestationsfuß 3 ist bodenseitig das Schutzprofil 2 angeordnet.

## Patentansprüche

1. Ladestation für Elektrofahrzeuge mit
- einem Ladestationsgehäuse,
- einer in dem Ladestationsgehäuse verlaufenden Tragkonstruktion, wobei die Tragkonstruktion mit Bereich des Bodens des Ladestationsgehäuses eine Befestigungskonsole zur Befestigung der Tragkonstruktion an einem Bodenfundament aufweist,
**dadurch gekennzeichnet,**
- **dass** das Ladestationsgehäuse zumindest teilweise über die Tragkonstruktion gestülpt ist und dass eine bodenseitige Stirnkante des Ladestationsgehäuses von einem Schutzprofil aufgenommen ist.

2. Ladestation nach Anspruch 1,
**dadurch gekennzeichnet,**
- **dass** das Schutzprofil umlaufend die Stirnkante aufnimmt.

3. Ladestation nach Anspruch 1 oder 2,
**dadurch gekennzeichnet,**
- **dass** das Schutzprofil zumindest abschnittsweise ein L-Profil, U-Profil oder ein C-Profil hat.

4. Ladestation nach einem der vorangehenden Ansprüche,
**dadurch gekennzeichnet,**
- **dass** das Schutzprofil innenseitig des Ladestationsgehäuses, sich in Längsrichtung des Ladestationsgehäuses erstreckende, voneinander beabstandete Stege aufweist, welche im montierten Zustand an der Innenseite des Ladestationsgehäuses anliegen.

5. Ladestation nach einem der vorangehenden Ansprüche,
**dadurch gekennzeichnet,**
- **dass** das Schutzprofil innenseitig des Ladestationsgehäuses, sich in Längsrichtung des Ladestationsgehäuses erstreckende Befestigungsstifte aufweist, welche im montierten Zustand in innenseitige, sich in Längsrichtung des Ladestationsgehäuses erstreckende, an der Innenseite des Ladestationsgehäuses angeordnete Nuten eingreift.

6. Ladestation nach einem der vorangehenden Ansprüche,
**dadurch gekennzeichnet,**
- **dass** das Schutzprofil innenseitig des Ladestationsgehäuses, sich radial nach innen erstreckende Laschen aufweist, wobei Ausnehmungen in den Laschen im montierten Zustand mit innenseitigen, sich in Längsrichtung des Ladestationsgehäuses erstreckenden, an der Innenseite des Ladestationsgehäuses angeordneten Nuten fluchten.

7. Ladestation nach einem der vorangehenden Ansprüche,
**dadurch gekennzeichnet,**
- **dass** sich das Schutzprofil auf der der Stirnkante abgewandten Seite in Längsrichtung in einen Bodenbereich erstreckt und dass im Bodenbereich an zumindest einer Seitenfläche zumindest eine Sollbruchstelle für eine Ausnehmung angeordnet ist.

8. Ladestation nach einem der vorangehenden Ansprüche,
**dadurch gekennzeichnet,**
- **dass** das Schutzprofil auf der der Stirnkante abgewandten Seite eben ist.

9. Ladestation nach einem der vorangehenden Ansprüche,
**dadurch gekennzeichnet,**
- **dass** das Schutzprofil beabstandet von der Befestigungskonsole an der Stirnkante angeordnet ist.

10. Ladestation nach einem der vorangehenden Ansprüche,
**dadurch gekennzeichnet,**
- **dass** das Schutzprofil an der Stirnkante klemmend gehalten ist.

11. Ladestation nach einem der vorangehenden Ansprüche,
**dadurch gekennzeichnet,**
- **dass** das Schutzprofil in Längsrichtung des Ladestationsgehäuses verschiebbar an der Stirnkante angeordnet ist.

12. Ladestation nach einem der vorangehenden Ansprüche,
**dadurch gekennzeichnet,**
- **dass** das Ladestationsgehäuse aus einem Ladestationsfuß und einem Ladestationskopf gebildet ist.

13. Ladestation nach einem der vorangehenden Ansprüche,
**dadurch gekennzeichnet,**
- **dass** die Befestigungskonsole an zumindest einer Seitenwand, bevorzugt zwei einander gegenüberliegenden Seitenwänden, radial nach außen gerichtete Federelement aufweist, wobei die Federelemente im montierten Zustand der Ladestation auf eine Innenwand des Ladestationsgehäuses eine Federkraft ausüben.

14. Ladestation nach einem der vorangehenden Ansprüche,
**dadurch gekennzeichnet,**
- **dass** die Befestigungskonsole in einem an den Stellelementen montierten Zustand mit einem Abstand zu einem Bodenfundament angeordnet ist.
